# EUROPEAN PATENT APPLICATION

(11) **EP 3 863 136 A1**
(43) Date of publication of application: **11.08.2021**
(21) Application number: 20156138.8
(22) Date of filing: 07.02.2020
(51) Int. Cl.: H02B 13/035, H01H 33/56, H02B 13/055, H02B 1/32

(54) **SF6 FREE GAS INSULATED SWITCHING DEVICE**

(71) Applicant: Siemens Aktiengesellschaft, 80333 München (DE)
(72) Inventor: CHIKHALE, Ravindra, 403602 Goa, Maharashtra (IN); JUNG, Wolfgang, 60435 Frankfurt (DE); SONAWANE, Mahesh, 410210 Navimumbai, Maharashtra (IN); SUNDIKAR, Sagar, 403726 Sancoale, Goa (IN)
(74) Representative: Patentanwaltskanzlei WILHELM & BECK

(57) **Abstract**

A switching device (200, 300) comprising a sealed enclosure (200A, 300A) housing therein an SF₆ free insulating environment and electrical components (201, 202A-202C, 203, 204, 205, 301A-301C, 302A-302C, 303, 304) exposed to the an SF₆ free insulating environment, is provided. The electrical components (201, 202A-202C, 203, 204, 205, 301A-301C, 302A-302C, 303, 304) are configured such that physical dimensions of the sealed enclosure (200A, 300A) comprising the SF₆ free insulating environment, are not greater than physical dimensions of a sealed enclosure (101) comprising SF₆ insulating environment, for an equivalent operational rating of the switching device (200, 300).

## Description

The present disclosure relates to switching devices such as circuit breakers. More particularly, the present disclosure relates to a gas insulated switching device having smaller carbon footprint due to the insulating gas used therein.

Conventionally, the most widely used insulating gas in medium voltage as well as high voltage electrical and electromechanical equipment in power transmission and substation applications is sulphur hexafluoride (SF₆). Generally, there are four major types of electrical equipment which use SF₆ for insulation and/or interruption purposes including gas insulated circuit breakers and current interruption equipment, gas insulated transmission lines, gas insulated transformers, and gas insulated substations. For these applications the electric power industry uses about 80% of the SF₆ produced worldwide, with circuit breaker applications accounting for majority of the usage. Depending on a particular function of the gas insulated equipment, some of the insulating gas properties vary. In case of circuit breakers, an excellent thermal conductivity and a high dielectric strength along with fast thermal and dielectric recovery are the main properties required in an insulating gas, to achieve a high interruption capability in the circuit breaker. These properties enable the insulating gas to make a rapid transition between the conducting and the dielectric state of the arc, and to withstand the rise of the recovery voltage. SF₆ based circuit breakers are presently superior in their performance to alternative systems such as high pressure air blast or vacuum circuit breakers as this gas offers all of the above properties required.

Despite of the desired properties possessed by SF₆, in both electrical insulation and current interruption performance, the radiative effect and the atmospheric lifetime of the SF₆ molecule renders this gas to be an aggravating agent for the greenhouse effect. Due to this, numerous studies have been undertaken by gas insulated switchgear (GIS) manufacturers to reduce SF₆ quantities and gas leakages, for example, by minimizing the size of apparatus and improving gas handling procedures. Moreover, many dielectric characterizations of natural gases such as Nitrogen, Carbon di-oxide, and/or dry air, or complex fluid mixtures such as ketones, etc., with natural gases are being explored to identify new eco-friendly insulation mediums with dielectric strength equivalent to that of SF₆.

Majorly, the properties desired for a given gas or a gas mixture for insulation applications in an equipment, are high dielectric strength, low toxicity, low condensation temperature, thermal stability, non-flammability, chemical inactivity with the other constituent materials of the equipment, thereby, having a low impact on the environment, as well as relatively easy availability and/or moderate cost. However, with change in the insulating medium to any of the SF₆ alternative candidates, heat conducting properties and dielectric properties of the equipment change accordinlgy. Thereby, challenging the mechanical design of the equipment and its compatibility and inter-connectivity with other equipment.

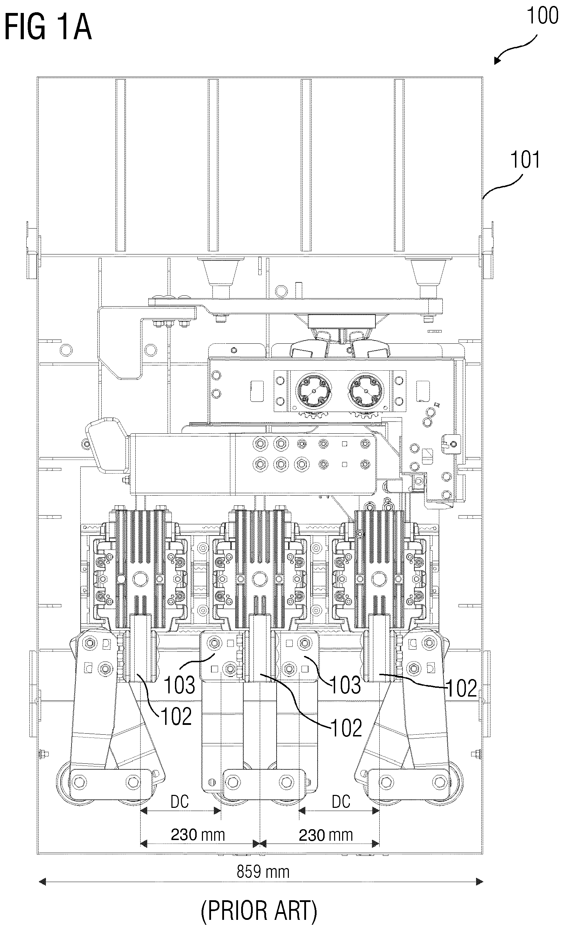

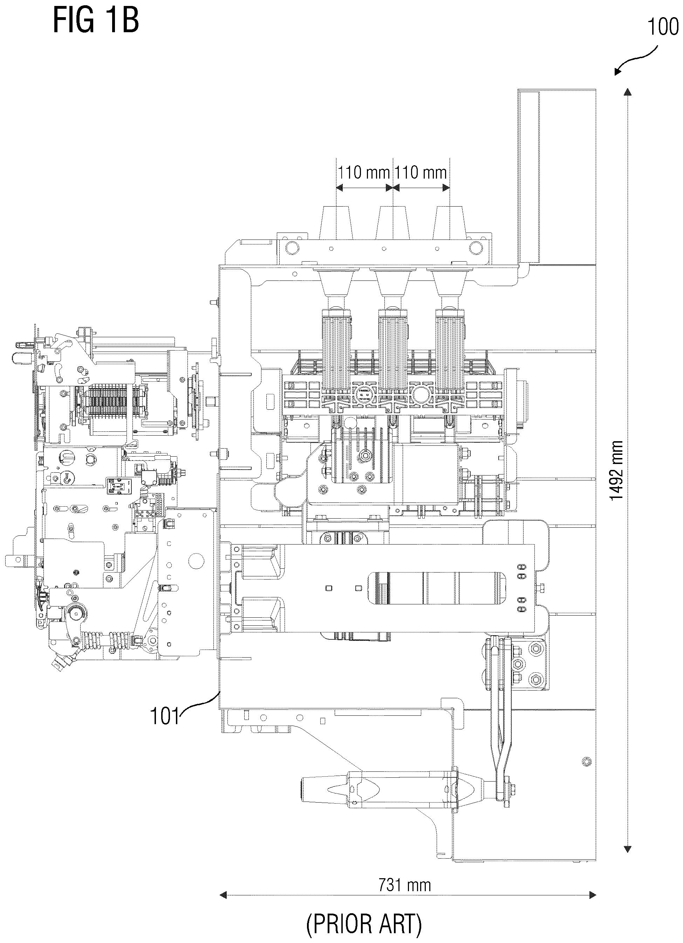

FIGS 1A and 1B illustrate different views of a SF₆ based gas insulated switchgear 100, according to the state of the art. FIG 1A shows an elevation view of the gas insulated switchgear 100. FIG 1B shows a side view of the gas insulated switchgear 100. The gas insulated switchgear 100 shown in FIGS 1A and 1B has an operational rating of up to 2500A. As SF₆ has good dielectric properties, the clearances required to be maintained are smaller when compared to the clearances required for a non-SF₆ gas insulated switchgear of a particular operational rating. For example, the gas insulated switchgear 100 has a vessel 101 containing there-within pressurized SF₆ and having a breadth of about 859 mm, a length of about 1492 mm and a width of about 731 mm, for which a pitch center distance between adjacent circuit breaker poles 102 is about 230 mm in order to meet the required clearance 'DC' to be maintained between the outgoing busbars 103. This clearance 'DC' must be at least 60mm for a gas insulated switchgear rated up to 24kV. These distances enable the gas insulated switchgear 100 to be a compact device. However, on replacing SF₆ with an alternative insulating medium that provides lower insulation when compared to SF₆, the clearances required to be maintained increase proportionally, thereby calling for an increase in the pitch center distances and making the vessel 101 bulkier in size. Thus, requiring the vessel 101 to be re-designed, thereby making the entire mechanical design process cumbersome and costly for accommodating alternatives to the SF₆ insulating medium. Moreover, due to changes in the design of the vessel 101 interconnectivity of the switchgear 100 to busbars may also get affected as the pitch center distance between busbar bushings which is about 110 mm in a SF₆ based gas insulated switchgear may have to be increased in a non SF₆ based version. Furthermore, overall size of the switchgear panel may also have to be increased to accommodate the bigger vessel therein. This makes the alternative insulating medium usage very unappealing to original equipment manufacturers as well as customers installing the switchgears. Some of the other conventional methods used are to fill the insulating gas with a high pressure to increase the density of the gas thereby, improving the dielectric strength. However, this in turn requires strengthening of the vessel by stiffening of walls and or investing in an expensive material for its construction.

Accordingly, it is an object of the present invention, to provide a SF₆ free gas insulated switchgear comprising a sealed enclosure, that is, a vessel that houses there-within SF₆ free insulating environment and electrical components exposed to the SF₆ free insulating environment, that addresses the aforementioned problems while ensuring ease of retro-fitting without increasing time and cost of the mechanical design.

The switching device disclosed herein is, for example, a medium voltage gas insulated switchgear having an operational rating of up to 24 kilo Volts and up to 2500 Amperes and achieves the aforementioned object in that, the electrical components are configured such that the physical dimensions of the sealed enclosure comprising the SF₆ free insulating environment are not greater than physical dimensions of a sealed enclosure comprising SF₆ insulating environment, for an equivalent operational rating of the switching device. The SF₆ free insulating environment comprises, for example, a liquid, a gas, and/or vacuum insulant. Advantageously, the SF₆ free insulating environment comprises at least carbon dioxide (CO₂) and nitrogen (N₂). According to an embodiment of the present disclosure, N₂ is used in a proportion of about 60% to 80% and CO₂ is used in a proportion of about 40% to 20%. The physical dimensions refer to an overall size of the vessel including a length, a breadth, and a width of the sealed enclosure. Moreover, physical dimensions also include physical properties of the vessel such as mechanical strength, stiffness, etc. As used herein, the term "equivalent" refers to nearly equal physical dimensions which do not require mechanical re-designing of the switching device including the sealed enclosure and the overall panel of the switching device.

The electrical components of the switching device comprise, for example, an outgoing bushing assembly having a plurality of outgoing busbars operably connected to bushings, a circuit breaker module, a disconnector module, and an incoming busbar assembly operably connected with one another. The outgoing busbars are either a single busbar per phase or a double busbar per phase. The circuit breaker module comprises interrupters such as vacuum interrupters encapsulated in and supported by poles. Advantageously, the circuit breaker module is installed in a horizontal configuration within the switching device for occupying optimal space in the vessel. The disconnector modules comprise ON, OFF, and Earth contacts and rotary post insulators switching between the contacts. The incoming busbar assembly comprises bushings connected to feeders.

According to one embodiment of the present disclosure, outgoing busbars are offset with respect to bushings operably connected thereto, of the outgoing bushing assembly. As used herein, the term "offset" refers to positioning the busbars such that a longitudinal axis passing centrally through the outgoing busbar and a longitudinal axis passing centrally through the pole connected thereto of the circuit breaker module, do not overlap or coincide with one another. Advantageously, two of the outgoing busbars are offset with respect to the bushings operably connected thereto in a three-phase switching device. These two outgoing busbars are the ones positioned on the outside, that is, closer in proximity to the sealed enclosure so as to maintain required clearance with respect to the central outgoing busbar from either side. A quantity of the offset is determined based on a dielectric clearance required to be maintained between the outgoing busbars with minimal increase in a pitch center distance between the poles compared to the pitch center distance between poles housed in the sealed enclosure comprising SF₆ insulating gas, for an equivalent operational rating of the switching device. Advantageously, an axial angle of the offset and a lateral distance of the offset are computed based on the dielectric clearance requirement defined for a particular operational rating, for example, at least 60 mm for up to 24kV rated switching device, and a limited variance threshold for the pitch center distance between poles for a SF₆ based switching device. The limited variance threshold is preferably near zero.

According to another embodiment of the present disclosure, each of the poles of the circuit breaker module is encapsulated with an insulating coating comprising, for example, an epoxy coating or a plastic coating, so as to provide dielectric insulation between phases of the switching device. Advantageously, the insulated poles support interrupter units positioned there-within.

According to yet another embodiment of the present disclosure, one or more parts of the disconnector module, for example, the ON contact, the OFF contact, the Earth contact, and/or the rotary post insulators have a generally blunt profile. For example, rounding off, that is, smoothening of sharp edges of these parts enables to adjust high mechanical stress points within the switching device, thereby, providing an enhanced dielectric stability of the switching device. Advantageously, in addition to the disconnector module, one or more of the electrical components such as the outgoing busbars are configured to be of a generally round or a rather gradual shape, especially around edges, to avoid sharp profiles in the mechanical design.

According to yet another embodiment of the present disclosure, one or more parts of the disconnector module, such as a rotary shaft, are coated with an insulating material such as plastic. Advantageously, in addition to the disconnector module, one or more of the electrical components are configured to have an insulating coating thereon to further enhance the dielectric stability.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIGS 1A-1B: illustrate different views of a SF₆ based gas insulated switchgear according to the state of the art.
- FIGS 2A-2B: illustrate different views of a SF₆ free gas insulated switchgear having an operational rating of up to 2500A, according to an embodiment of the present disclosure.
- FIGS 3A-3C: illustrate different views of a SF₆ free gas insulated switchgear having an operational rating of up to 1250A, according to another embodiment of the present disclosure.
- FIG 4: illustrates a perspective view of a circuit breaker module of the SF₆ free gas insulated switchgear shown in FIGS 2A-2B.
- FIGS 5A-5B: illustrate clearances maintained for a disconnector module of the SF₆ free gas insulated switchgear shown in FIGS 2A-2B and/or FIG 3.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

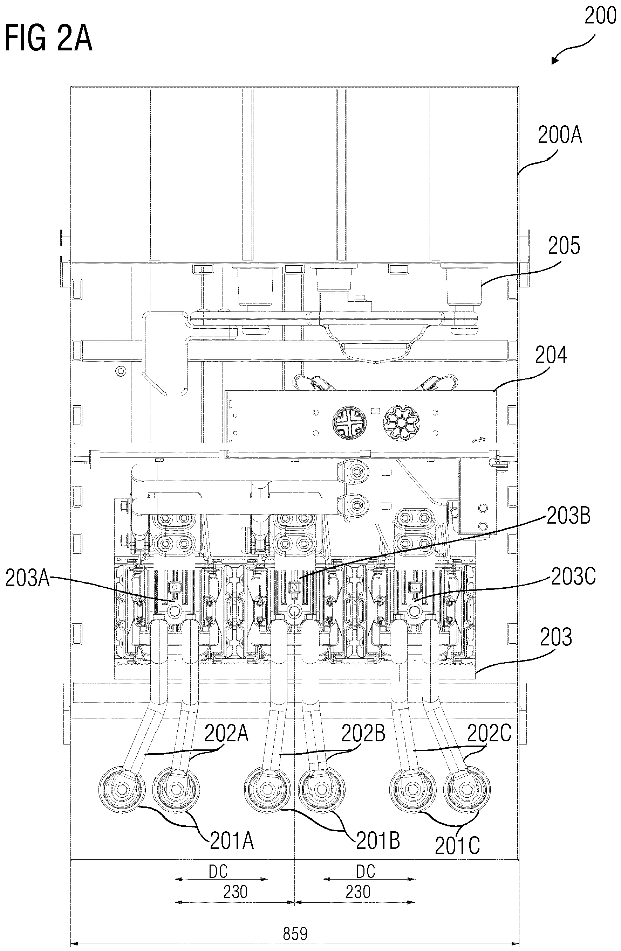

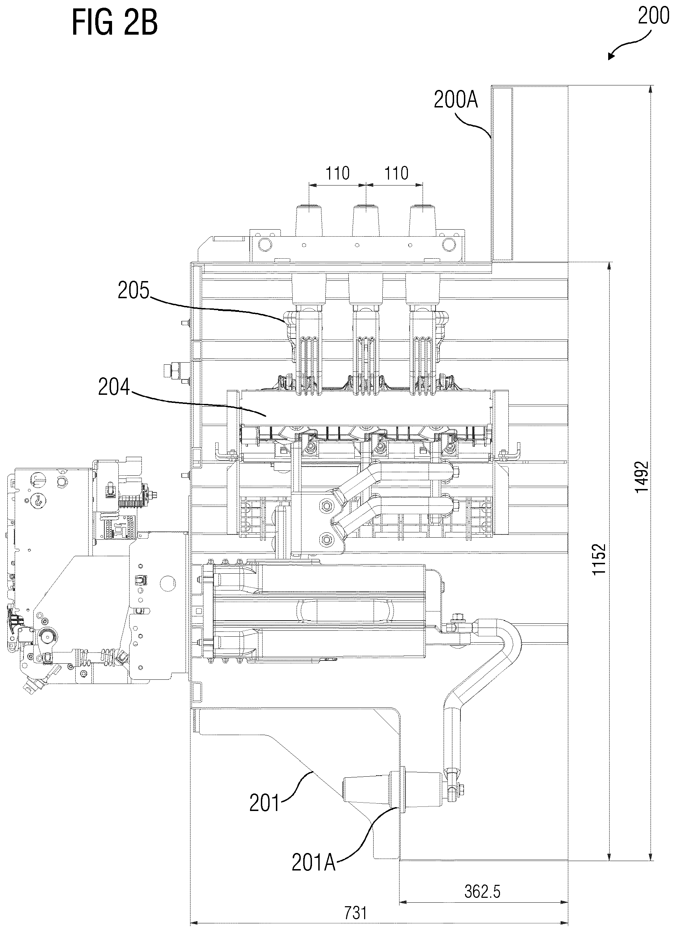

FIGS 2A-2B illustrate different views of a SF₆ free gas insulated switchgear 200 having an operational rating of up to 2500A, according to an embodiment of the present disclosure. FIG 2A shows an elevation view of the gas insulated switchgear 200. FIG 2B shows a side view of the gas insulated switchgear 200. The gas insulated switchgear 200 has a vessel 200A housing there-within various electrical components required for operating the gas insulated switchgear 200. The vessel 200A contains a pressurized mixture of Carbon Dioxide (CO₂) and Nitrogen (N₂) as an insulating medium there-within instead of SF₆. The physical dimensions, for example, a breadth of about 859 mm, a width of about 731 mm, and a length of about 1492 mm, of the vessel 200A are same as that of a vessel used for a SF₆ based gas insulated switchgear 100 shown in FIGS 1A-1B. However, size of a vessel is a direct function of the dielectric strength of the insulating medium used there-within. Also, SF₆ is known to have better dielectric strength when compared to CO₂N₂ gas. Therefore, the challenge is to fit the modules of the gas insulated switchgear 200 within the vessel 200A without increasing the existing physical dimensions and while maintaining safety clearances so as to achieve desired dielectric properties thereby, meeting the industry standards.

The electrical components of the gas insulated switchgear 200 comprise an outgoing bushing assembly 201 comprising bushings 201A, 201B, and 201C each of which are responsible for a single phase and operably connected to outgoing busbars 202A, 202B, and 202C respectively, which in turn are connected to poles 203A, 203B, and 203C respectively of the circuit breaker module 203 which in turn is connected to the disconnector module 204 connected to the busbar bushings 205, all housed within the vessel 200A. To meet the aforementioned challenge of accommodating these modules of the gas insulated switchgear 200 within the vessel 200A without increasing the physical dimensions and while maintaining safety clearances, there are some constructional modifications made to the assembly of these modules when compared to the construction of the SF₆ based gas insulated switchgear 100.

These modifications include, but are not limited to, offsetting of two of the three outgoing busbars 202A and 202C such that they are not in an absolute vertical alignment with the respective poles 203A and 203C but are slightly offset. This enables in achieving the required clearance DC to be maintained between the adjacent outgoing busbars 202A and 202B, and between the adjacent outgoing busbars 202B and 202C, as shown in FIG 2A without any significant increase in pitch center distance between the poles 203A, 203B, and 203C. As shown in FIG 2A, the pitch center distance is retained to be 230 mm which is same as in the SF₆ based gas insulated switchgear as shown in FIG 1A. This in turn enables the overall vessel dimensions to remain unchanged.

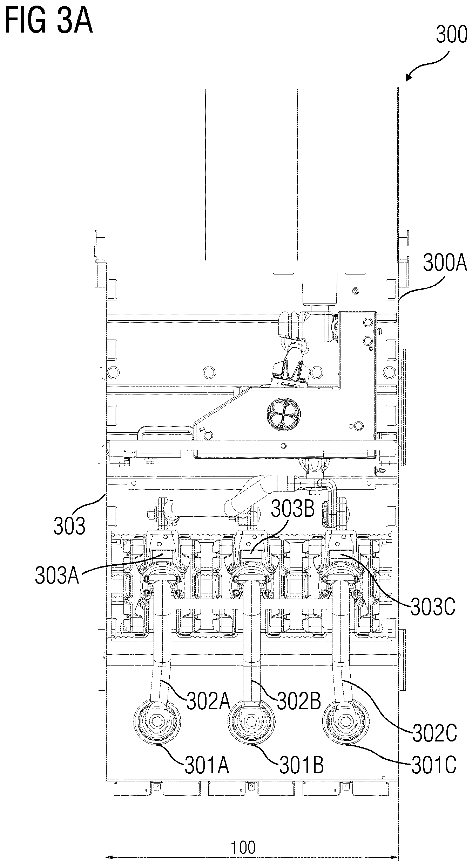

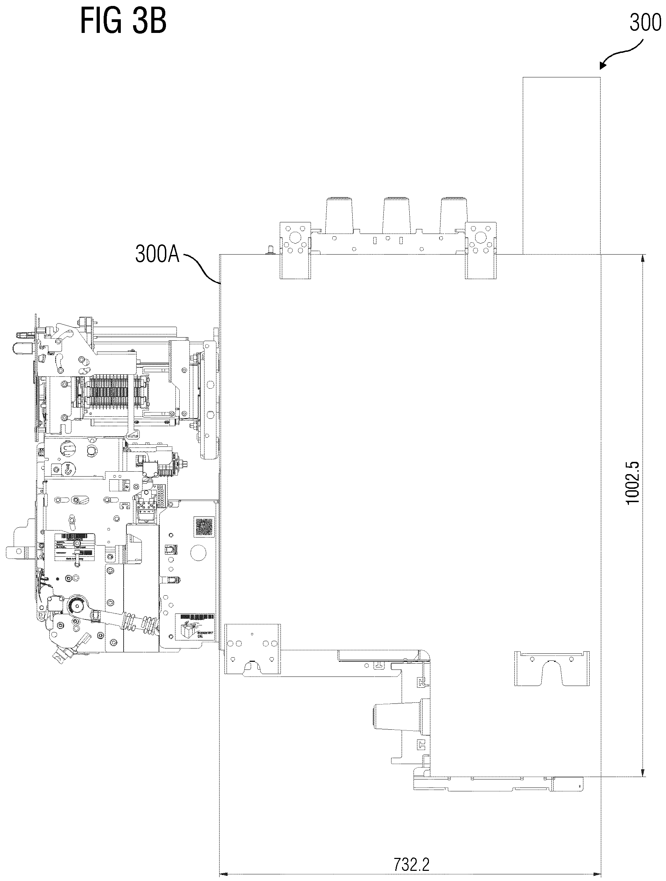

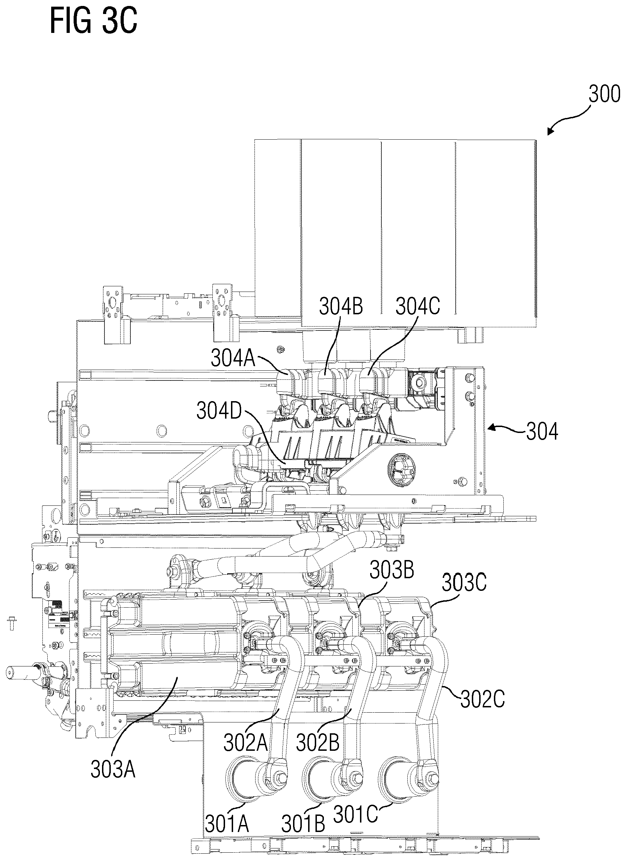

FIGS 3A-3C illustrate different views of a SF₆ free gas insulated switchgear 300 having an operational rating of up to 1250 Amperes, according to another embodiment of the present disclosure. FIG 3A shows an elevation view, FIG 3B shows a side view and FIG 3C shows a perspective view. In this embodiment as well, the physical dimensions of the vessel 300A as shown in FIGS 3A and 3B remain same as the corresponding rated vessel for a SF₆ based gas insulated switchgear (not shown). Apart from the modifications described in the detailed description of FIGS 2A-2B, that is, offsetting, with respect to the poles 303A and 303C, of the outgoing busbars 302A and 302C which are connected to the bottom bushing assembly 301A-301C, there are some additional constructional modifications that are made to adhere to clearance requirements while ensuring minimal increase in pitch center distances and/or no change in the size of the vessel 300A, in comparison to the corresponding rated SF₆ gas insulated switchgear device. These modifications include, for example, smoothening of edges of one or more parts of the disconnector module 304, for example, the ON contacts 304A, 304B, and 304C. Moreover, the outgoing busbars 302A, 302B, and 302C are constructed to have rounded shapes. Rounding off sharp edges allows for adjusting a position of stress points, also known as triple points, in the mechanical design thereby, precluding increase required in the clearances based on the dielectric properties of the SF6 alternative insulating gas. Furthermore, the shaft 304D in the disconnector module 304 is constructed such that there exists an insulating coating thereon avoiding any bare metal parts. This insulating coating is plastic, offering an enhanced dielectric stability. Also, the poles 303A, 303B, and 303C are constructed of insulated materials such as plastic or epoxy coating to further add to overall dielectric strength.

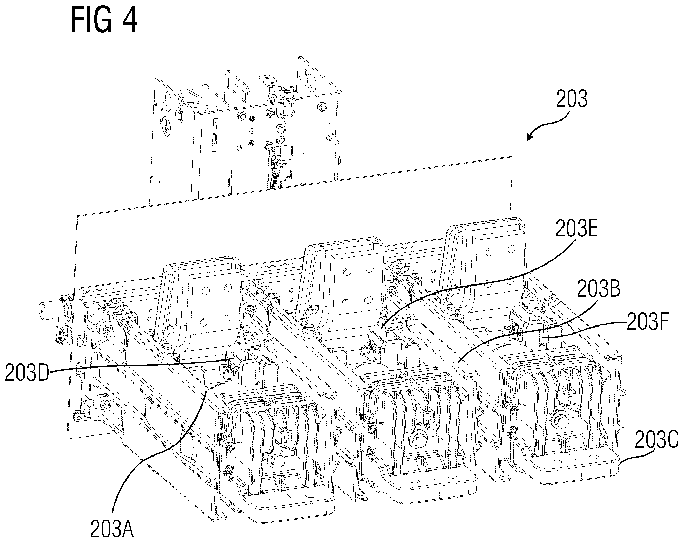

FIG 4 illustrates a perspective view of a circuit breaker module 203 of the SF₆ free gas insulated switchgear 200 shown in FIGS 2A-2B. The circuit breaker module 203 comprises an interrupter unit 203D, 203E, and 203F corresponding to each phase encapsulated within poles 203A, 203B, and 203C respectively. The poles 203A, 203B, and 203C are insulated poles made of either plastic coating or epoxy coating which act not only as a support for the interrupter units 203D, 203E, and 203F, but also as an insulator between adjacent phases, that is, poles 203A, 203B and 203C. This insulation in turn helps maintain an optimal pitch center distance between two adjacent poles 203A, 203B, and 203C, thereby, making it possible to retain physical dimensions of the vessel 200A similar to that of an equivalent rated SF₆ based gas insulated switchgear 100 shown in FIGS 1A and 1B.

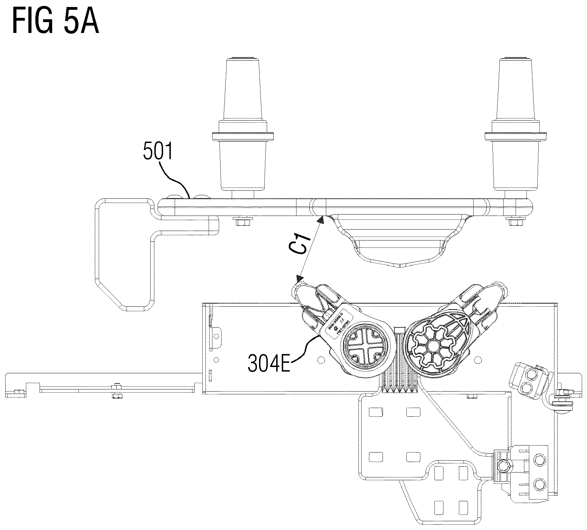

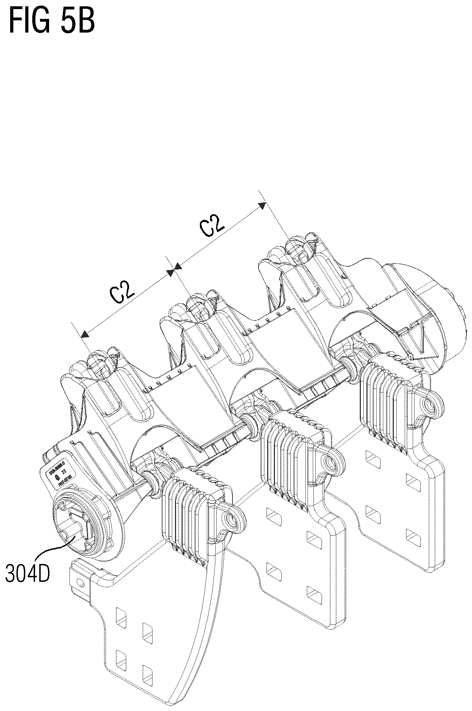

FIGS 5A-5B illustrate clearances maintained within and around the disconnector module 304 of the SF₆ free gas insulated switchgear shown in FIGS 3A-3C. FIG 5A shows an isolating distance C1 required to be maintained between rotary post insulator 304E and the corresponding busbar bushing 501. FIG 5B shows a clearance C2 required to be maintained between each of the rotary post insulators 304E mounted on the shaft 304D of the disconnector module 304. The clearances C1, C2, and C3 are typically about 60mm for up to 24kV operational rating. The clearances required typically increase proportionally with the rated operating voltage and decrease proportionally with an increase in the pressure of filling the insulating gas.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of reference numerals:

- 100: switching device/switchgear
- 101: housing
- 102: pole(s)
- 103: outgoing busbar(s)
- 200, 300: switching device/switchgear
- 200A, 300A: vessel
- 201A-201C, 301A-301C: bushings
- 202A-202C, 302A-302C: outgoing busbars
- 203, 303: circuit breaker module
- 203A-203C, 303A-303C: pole(s)/insulated pole(s)
- 203D-203F: interrupter units
- 204, 304: disconnector module
- 205, 501: busbar bushings
- 304A-304C: ON contacts
- 304D: shaft
- 304E: rotary post insulator

## Claims

1. A switching device (200, 300) comprising:
- a sealed enclosure (200A, 300A) housing therein a sulfur hexafluoride (SF₆) free insulating environment and electrical components (201, 202A-202C, 203, 204, 205, 301A-301C, 302A-302C, 303, 304) exposed to the SF₆ free insulating environment;
**characterized in that**:
- the electrical components (201, 202A-202C, 203, 204, 205, 301A-301C, 302A-302C, 303, 304) are configured such that physical dimensions of the sealed enclosure (200A, 300A) comprising the SF₆ free insulating environment, are not greater than physical dimensions of a sealed enclosure (101) comprising SF₆ insulating environment, for an equivalent operational rating of the switching device (200, 300).

2. The switching device (200, 300) according to claim 1, wherein the SF₆ free insulating environment comprises one of a liquid, a gas, and a vacuum.

3. The switching device (200, 300) according to any one of the claims 1 and 2, wherein the SF₆ free insulating environment comprises at least carbon dioxide (CO₂) and nitrogen (N₂).

4. The switching device (200, 300) according to claim 1, wherein the electrical components (201, 202A-202C, 203, 204, 205, 301A-301C, 302A-302C, 303A-303C, 304A-304E) comprise at least, an outgoing bushing assembly (201, 301A-301C, 202A-202C, 302A-302C) including a plurality of outgoing busbars (202A-202C, 302A-302C) operably connected to bushings (201A-201C, 301A-301C), a circuit breaker module (203, 303), a disconnector module (204, 304), and an incoming busbar assembly (205) operably connected with one another.

5. The switching device (200, 300) according to claim 1, wherein outgoing busbars (202A-202C, 302A-302C) are configured to be offset with respect to bushings (201A-201C, 301A-301C) operably connected thereto, of an outgoing bushing assembly (201, 301A-301C, 202A-202C, 302A-302C) of the electrical components (201, 202A-202C, 203, 204, 205, 301A-301C, 302A-302C, 303A-303C, 304A-304E).

6. The switching device (200, 300) according to claim 5, wherein two of the outgoing busbars (202A-202C, 302A-302C) are offset with respect to the bushings (201A-201C, 301A-301C) operably connected thereto in a three phase switching device (200, 300).

7. The switching device (200, 300) according to claim 5, wherein a quantity of offset is determined based on a dielectric clearance (DC) required to be maintained between the outgoing busbars (202A-202C, 302A-302C) with minimal increase in a pitch center distance between poles (203A-203C, 303A-303C) compared to the pitch center distance between poles (102) housed in the sealed enclosure (101) comprising SF₆ insulating environment, for an equivalent operational rating of the switching device (200, 300).

8. The switching device (200, 300) according to claim 1, wherein each pole (203A-203C, 303A-303C) of a circuit breaker module (203, 303) of the electrical components (201, 202A-202C, 203, 204, 205, 301A-301C, 302A-302C, 303A-303C, 304A-304E) is encapsulated with an insulating coating so as to provide dielectric insulation between phases of the switching device (200, 300).

9. The switching device (200, 300) according to claim 8, wherein each dielectrically insulated pole (203A-203C, 303A-303C) is configured to support an interrupter unit (203D, 203E, and 203F) of a circuit breaker module (203, 303).

10. The switching device (200, 300) according to claim 1, wherein one or more parts (304A-304E) of a disconnector module (204, 304) of the electrical components (201, 202A-202C, 203, 204, 205, 301A-301C, 302A-302C, 303A-303C, 304A-304E) is configured to have a generally blunt profile.

11. The switching device (200, 300) according to any one of the claims 1 and 10, wherein one or more parts (304A-304E) of a disconnector module (204, 304) of the electrical components (201, 202A-202C, 203, 204, 205, 301A-301C, 302A-302C, 303A-303C, 304A-304E) are coated with an insulating material.

12. The switching device (200, 300) according to claim 1, is a medium voltage switchgear having an operational rating of up to 24 kilo Volts and up to 2500 Amperes.
